# EUROPÄISCHE PATENTANMELDUNG

(11) **EP 1 848 098 A1**
(43) Veröffentlichungstag der Anmeldung: **24.10.2007**
(21) Anmeldenummer: 07075149.0
(22) Anmeldetag: 23.02.2007
(51) Int. Cl.: H02K 53/00

(54) **Schwerkraft Generator/Antriebsmechanismus**

(30) Priorität: 02.03.2006 NL 1031282
(71) Anmelder: Haan, Berend, 6871 EJ Renkum (NL)
(72) Erfinder: Haan, Berend, 6871 EJ Renkum (NL)

(57) **Zusammenfassung**

Bei dieser Erfindung handelt es sich um ein Gerät dass wenn es einmal gestartet ist, kontinuierlich weiter dreht durch die Schwerkraft und die **Magnetischenkraft.**

Die Magnetischenkraft hat sein Ursprung durch permanetmagnete oder Elektromagnete, dieser Elektromagnete beziehen die Elektrizität von einem änlichen Gerät.

Wenn dass Gerät einmal im Gang ist, kann es Strom generieren oder andere Geräte antreiben.

Das Gerät kann auch benützt werden wie ein fast reibungsloses Lager.

## Beschreibung

Der Generator besteht aus einem Zylinder mit darin eine gelagerte Achse.
(Das Gerät kann auch dienen, wie ein fast reibungsloses Lager.Es kann auf diese Weise in einen anderen Apparat eingebaut werden.)

Zwischen der Achse und dem Zylinder sind gebogene Schotten angebracht und darauf befinden sich die stählernen Kügeln.

Es gibt mehrere Compartimenten nebeneinander, dadurch gibt es eine gleichmässige Bewegung.

Die Anzahl der Schotten pro Abteilung kann varieren und verdreht sein in Hinsicht auf die anderen Compartimente.

Die gelagerte Achse hat an der Forderseite und Hinterseite eine gelagerte Unterstützung, hier durch kann der Zylinder frei rotieren.

An der aussen Seite des Zylinder sind gewickelte Spühlen angebracht die in Verbindung stehen mit einem Collector auf der Achse.

Von dem Collector wird der elektrischen Strom durch Kohlenbürsten abgenommen.

Um den Zyilinder zu rotieren und die Elektrizität zu generieren sind an der Aussenseite permanente Magnete aufgestelt.

Die Magnete sind an einer Seite angebracht und bedecken eine oberfläche von ungefähr 50% bis 80%.

Die Magnete sorgen dafür, dass die stähremen Kügeln nach aussen, in die Richtung der Magnete, gezogen werden und sorgen ebenfals für das Magnetfeld um den Elektrischen Strom zu generieren.

Wenn die Kügel über den Totenpunkt ist sorgt die Schwerkraft und das Magnetismus für eine permanente rotierung.

Die Magnete sind zu verschieben rund um das Gehäuse und können auf diese Weise in die richtige position gestellt werden.

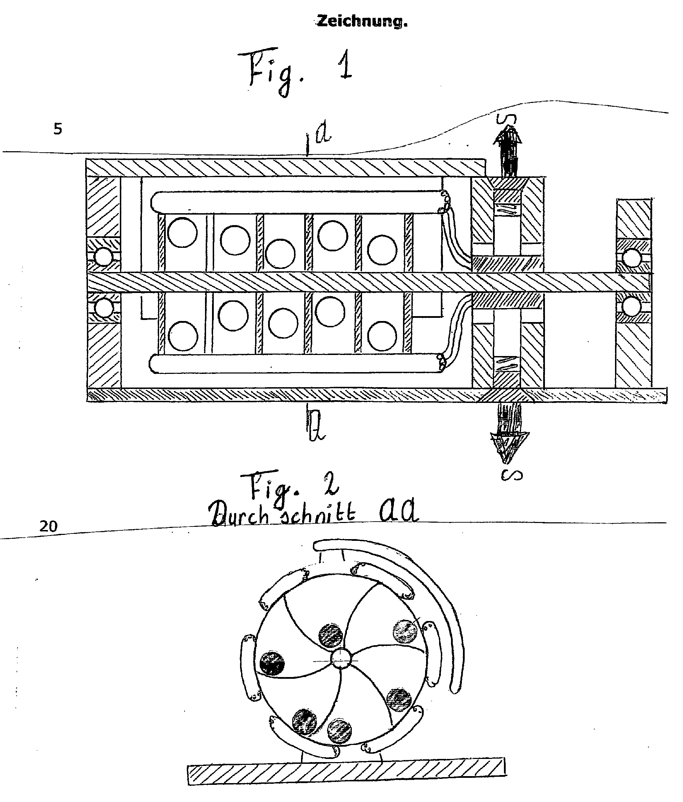

## Patentansprüche

1. Das Gerät hat fast ein Rendement von 100% und kann **dadurch** das eingefürhte Vermögen, zum Beispiel von einem Wasserrad oder Wind, komplett umsetzen in Elektrizität.

2. Der Generator besteht aus einem Zylinder mit darin eine gelagerte Achse.

3. Das Gerät kann auch dienen wie ein fast reibungslose Lager und auf diese Weise in einem anderem Gerät verarbeitet werden.

4. Zwischen der Achse und dem Zylinder sind gebogene Schotten angebracht auf denen, die stahlerne Kügel liegen.

5. Es gibt mehrere Compartimenten nebeneinander, hierdurch gibt es eine gleichmässige Bewegung. (Die rotierung ist gleichmässig.)

6. Die Anzahl der Schotten pro Compartiment kann wechelsend sein,und verdreht sein im Vergleich mit den anderen Compatimenten.

7. Die gelagerte Achse hat an der Forder- und Hinterseite Unterstützungen, so dass das Gerät frei rotieren kann.

8. An der Aussenseite des Zylinders ist eine Spühle gewickelt die in Verbindung steht mit einem Collector auf der Achse.

9. Von dem Collector wird die Elektrizität durch Kohlbürsten abgenommen.

10. Um den Zylinder zu rotieren und die Elektrizität zu erzeugen gibt es permanente Magnete an der Aussenseite des Rotors.

11. Die Magnete sind an einer Seite angebracht über 50% bis 80% von der Oberfläche.

12. Die Magnete sorgen dafür, dass die Kügeln schneller an die Aussenseite gezogen werden, hierdurch wird der Arm schnell grösser und wird die Kraft wirksam.

13. Die Magnete sind eine form von externen Kräften die nicht zu gross werden darf, dass es die Kügeln fixiert und **dadurch** die Rotierung stopt.

14. Wenn die Stählerne Kügeln über den Totenpunkt sind wird die Rotierung, durch die grössere Arm und Kraft, weiter gehen. Die Schwerkraft und die Magnetische Kraft sorgen für eine permanente Bewegung und sorgen dadurch, das die extra Kraft zum Beispiel Wind oder Wasserkraft, für fast 100% in Elektrizität umgesetzt werden kann.

15. Die Magnete sind zu verschieben, können rotieren um das Gehäuser, und können auf diese weise in die optimale Position gesetzt werden.

16. Die Möglichkeit kann varieren vom erzeugen von Elektrizität für Caravan bis zu herstellung von Wasserstobgas durch Elektrolyse und so weiter.

17. Auch die Antreibung für Personenkraftwagen,zum Beispiel ein Hybride, gehört zu den Möglichkeiten.

18. Es ist eine Umweitfreundliche Weise um mechanische Geräte anzutreiben oder Elektrizität zu erzeugen.
